# FASCICULE DE BREVET EUROPEEN

(11) **EP 2 001 195 B1**
(45) Date de publication et mention de la délivrance du brevet: **07.11.2012**
(21) Numéro de dépôt: 08155728.2
(22) Date de dépôt: 06.05.2008
(51) Int. Cl.: H04L 29/12, H04L 29/06

(54) **Procédé d'établissement d'une communication point à point entre un terminal appelant et un terminal appelé d'un réseau sans fils de communication par paquets de type ad-hoc**
Verfahren zur Herstellung einer Punkt-zu-Punkt-Kommunikation zwischen einem anrufenden Endgerät und einem angerufenen Endgerät in einem Funknetz mit Ad-hoc-Paket-Kommunikation
Method of establishing point-to-point communication between a calling terminal and a called terminal in an ad hoc packet communication wireless network

(30) Priorité: 11.05.2007 FR 0703420
(43) Date de publication de la demande: 10.12.2008
(73) Titulaire: Apple Inc., Cupertino, CA 95014 (US)
(72) Inventeur: Meyer, Laurent, 92150 Suresnes (FR)
(74) Mandataire: Lang, Johannes

(56) Documents cités:
- WO-A-2007/044597
- US-A1- 2006 242 322
- US-B1- 6 269 099

## Description

La présente invention concerne un procédé d'établissement d'une communication point à point entre un terminal appelant et un terminal appelé d'un réseau sans fils de communication par paquets de type ad-hoc. Il concerne plus précisément un tel procédé lorsque chaque terminal de ce réseau est associé à une adresse réseau unique et qu'un identifiant unique, dit public, est associé à chaque usager utilisant un de ces terminaux pour communiquer avec un autre usager utilisant un autre de ces terminaux.

Il est connu des réseaux sans fils de communication qui permettent l'échange entre usagers de messages de données sous forme de paquets via des terminaux qui communiquent ces paquets à travers ces réseaux de communication. De tels réseaux sont dit de communication par paquets. Par exemple on peut citer les réseaux de type WiFi qui sont basés sur la famille de normes 802.11 ou dans le cas de la téléphonie mobile les réseaux de type GPRS (*General Packet Radio System* an anglais) ou UMTS (*Universal Mobile for Telecommunication System* en anglais).

Le document WO 2007/044597 décrit une communication point-à-point dans un réseau sans fil ad-hoc selon laquelle un dispositif sans fil réalise une recherche d'un dispositif sans fil cible, réalise une authentification de ce dispositif sans fil cible et génère une clé de session.

Il est également connu que ces types de réseaux de communication sont déployés sur une zone géographique d'une manière soit organisée, soit ad-hoc. Ils sont dits organisés lorsque les échanges de messages de données entre terminaux et notamment l'allocation de la bande passante disponible pour ces échanges, sont contrôlés par un équipement central. On parle de Point d'accès *(Access Point* en anglais) dans le cas de réseaux de type Wifi et de station de base dans le cas de réseaux de téléphonie.

Ces types de réseaux sont dits ad-hoc lorsqu'aucun équipement central ne contrôle ces échanges et la bande passante de ce type de réseau est alors partagée de manière concurrente pour les échanges simultanés entre terminaux.

Les réseaux de communication sans fils de type ad-hoc, permettent l'établissement, d'une part, de communications point à point, c'est-à-dire de communications destinées à l'échange bi-directionel de messages de donnée entre deux terminaux et, d'autre part, de communication en mode diffusé, c'est-à-dire de diffusion par un terminal d'un message de données qui sera alors reçu par chaque terminal. On peut noter que dans un réseau ad-hoc, il est supposé que chaque terminal est à la portée de chacun des autres terminaux de ce réseau.

L'échange de messages de données entre terminaux d'un réseau sans fils de communication par paquets est le plus souvent mis en oeuvre en utilisant un protocole de niveau 3 (couche réseau du modèle OSI). Dès lors qu'un usager souhaite diffuser un message de données à l'ensemble des usagers utilisant chacun un des terminaux du réseau, le terminal de cet usager envoie alors ce message de données à une adresse dite de diffusion. Cette adresse est connue de tous les terminaux du réseau de communication qui sont alors prévus pour recevoir toutes les données diffusées à cette adresse.

Lorsqu'un tel échange est effectué via une communication point à point, une liaison est établie entre l'adresse de niveau 3 dite par la suite adresse réseau du terminal appelant et l'adresse réseau du terminal appelé.

Par la suite le terme 'appelant' désigne le terminal qui est à l'initiative de l'établissement d'une communication et le terme 'appelé' désigne le terminal avec qui le terminal appelant souhaite établir cette communication. Par extension l'usager qui utilise le terminal appelant est dit usager appelant et l'usager qui utilise le terminal appelé est dit usager appelé.

Dans le cas où ce protocole de niveau 3 est le protocole IP *(Internet Protocol* en anglais), l'adresse réseau d'un terminal est l'adresse IP de ce terminal.

On peut noter que l'adresse réseau de chaque terminal d'un réseau de communication est unique dans l'espace d'adressage relatif à ce réseau de communication. Ainsi, lorsqu'un terminal appelant connaît l'adresse réseau d'un terminal appelé, ce terminal appelant peut établir une communication point à point avec ce terminal appelé.

L'accès aux réseaux sans fils de communication par paquets de type ad-hoc nécessite parfois que l'usager s'abonne auprès d'un opérateur. C'est le cas par exemple pour l'accès à des réseaux de téléphonie. En effet, suite à l'abonnement d'un usager auprès d'un opérateur d'un réseau de téléphonie pour y accéder, cet opérateur délivre à cet usager un identifiant unique qualifié de public car connu des autres abonnés afin que ceux-ci puissent établir des communications point à point avec cet usager. Cet identifiant, qui peut-être un numéro de téléphone de cet usager nouvellement abonné, est mémorisé dans les répertoires des terminaux utilisés par les autres abonnés qui souhaitent communiquer avec cet usager nouvellement abonné.

Dans le cas où le réseau sans fils de communication par paquets est de type organisé, l'équipement central exerce la fonction de routage des messages de donnée à échanger entre terminaux qui est basée sur les adresses réseau de ces terminaux.

Par contre, dans le cas où le réseau sans fils de communication par paquets est de type ad-hoc, cette fonction de routage n'est plus assurée car aucun équipement de ce réseau ne remplit cette fonction. En effet, pour qu'un réseau sans fils de communication par paquets de type ad-hoc soit opérationnel il est nécessaire, lors de la configuration de ce réseau, qu'une adresse réseau soit associée à chaque terminal participant à ce réseau.

Pour cela, il est connu que chaque terminal de ce réseau tire de manière aléatoire une adresse réseau dans un même ensemble prédéfini d'adresses réseau qui est connu de chacun des terminaux. Le nombre d'adresses disponibles est tel que la probabilité que deux adresses réseau tirées soient identiques est très faible. Nous la considèrerons par la suite nulle. L'adresse réseau ainsi associée à chaque terminal du réseau ad-hoc n'est donc connue que du terminal qui l'a tirée. La durée de vie de ces adresses réseau, c'est-à-dire leur association avec ces terminaux, ne sont valides que durant une session de ce réseau ad-Hoc.

Ainsi, un usager utilisant un terminal d'un réseau sans fils de communication par paquets de type ad-Hoc, qui souhaite établir une liaison de niveau 3 via son terminal (appelant) avec le terminal utilisé par un autre abonné (appelé) doit pour cela connaître l'adresse réseau de ce terminal appelé. Ensuite, l'usager appelant doit entrer manuellement l'adresse réseau du terminal appelé avant que la communication point à point ne s'établisse. Ce procédé peut s'avérer fastidieux pour un usager qui n'utiliserait que très peu souvent ce type de communication.

Le problème résolu par la présente invention est de rendre automatique l'échange des adresses réseau entre le terminal d'un usager appelé et le terminal d'un usager appelant dès lors que l'usager appelant souhaite établir une communication point à point avec un usager appelé.

A cet effet, la présente invention concerne un procédé d'établissement d'une communication point à point entre un terminal appelant et un terminal appelé d'un réseau sans fils de communication par paquets de type ad-hoc constitué d'une pluralité de terminaux, chaque terminal du réseau étant associé à une adresse réseau utilisée pour échanger des données via ledit réseau. Le procédé est caractérisé en ce qu'il comporte :
- une étape de chiffrement par le terminal appelant d'un nombre entier aléatoire par une clé définie à partir d'un identifiant unique, dit public, qui est associé à l'usager utilisant le terminal appelé,
- une étape de diffusion par le terminal appelant d'un message contenant l'adresse réseau du terminal appelant et une information, dite première, déterminée à partir du nombre entier aléatoire,
- une étape de traitement par chaque terminal du réseau qui est récepteur du message diffusé, au cours de laquelle le terminal récepteur répond à l'adresse réseau du terminal appelant son adresse réseau et une information, dite seconde, qui est déterminée à partir de ladite première information et de l'identifiant unique public associé à l'usager dudit terminal récepteur, et
- une étape d'établissement par ledit terminal appelant d'une communication entre l'adresse réseau du terminal appelant et l'adresse réseau du terminal récepteur identifié comme étant ledit terminal appelé lorsque la seconde information émise par ledit terminal récepteur qui est reçue par le terminal appelant est identique à une information, dite troisième, déterminée par le terminal appelant à partir du nombre entier aléatoire.

Selon un mode de réalisation, ladite première information est le résultat du chiffrement du nombre entier aléatoire par la clé, ladite deuxième information est le résultat du déchiffrement de ladite première information par un identifiant public qui est associé à l'usager utilisant l'un des terminaux récepteur du message diffusé et ladite troisième information est le nombre entier aléatoire.

Selon un autre mode de réalisation, ladite première information est le nombre entier aléatoire, ladite deuxième information est le résultat du chiffrement de ladite première information par un identifiant public qui est associé à l'usager utilisant l'un des terminaux récepteur du message diffusé et ladite troisième information est le résultat du chiffrement du nombre entier aléatoire par la clé.

Selon un mode de réalisation, ledit nombre entier aléatoire et la clé sont exprimés par un même nombre de bits, caractérisé en ce que le chiffrement du nombre entier aléatoire par la clé est une opération logique réalisée bit à bit.

Selon un mode de réalisation, l'opération logique bit à bit est un ou exclusif.

Selon un mode de réalisation, le chiffrement du nombre entier aléatoire par la clé est réalisé par une méthode de type par blocs.

Selon un mode de réalisation, l'identifiant public associé à un usager est son numéro de téléphone.

Selon un aspect matériel, la présente invention concerne un terminal d'un réseau sans fils de communication par paquets de type ad-Hoc destiné à établir une communication point à point avec un autre terminal dit appelé, ledit terminal comportant des moyens prévus pour la mise en ouvre du procédé ci-dessus.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels:
la Fig. 1 qui représente un schéma synoptique d'un exemple de réseau sans fils de communications par paquets de type ad-Hoc selon la présente invention,
la Fig. 2 qui représente un diagramme des étapes du procédé d'établissement d'une communication point à point entre un terminal appelant et un terminal appelé d'un réseau sans fils de communication par paquets de type ad-hoc selon la présente invention,
la Fig. 3 qui représente un schéma d'un terminal destiné à être utilisé dans le réseau pour la mise en oeuvre la présente invention, et
la Fig. 4 qui représente un autre schéma d'un terminal du réseau destiné à la mise en oeuvre de la présente invention.

L'invention proposée consiste à ce que le terminal appelant diffuse à tous les terminaux du réseau ad-hoc un message comportant son adresse réseau et l'identifiant unique public de l'usager appelé. Chaque terminal (utilisé par un usager) récepteur de ce message répond alors à l'adresse réseau du terminal appelant par un message qui contient l'identifiant unique public de l'usager de ce terminal récepteur et son adresse réseau. Enfin le terminal appelant compare l'identifiant unique public qu'il reçoit de chaque terminal avec l'identifiant unique public de l'usager qu'il souhaite appeler. Lorsque l'un d'entre eux est identique à l'identifiant unique public de l'usager qu'il souhaite appeler, le terminal appelant établit une communication point à point entre son adresse réseau et l'adresse réseau contenu dans le message reçu qui contient cet identifiant identique.

Ce procédé diffuse en clair sur le réseau les identifiants public des usagers alors qu'il est souhaitable d'éviter que des données privées de ces usagers soient ainsi diffusées. Il est ainsi procédé à un chiffrement des données privées contenues dans les messages échangés.

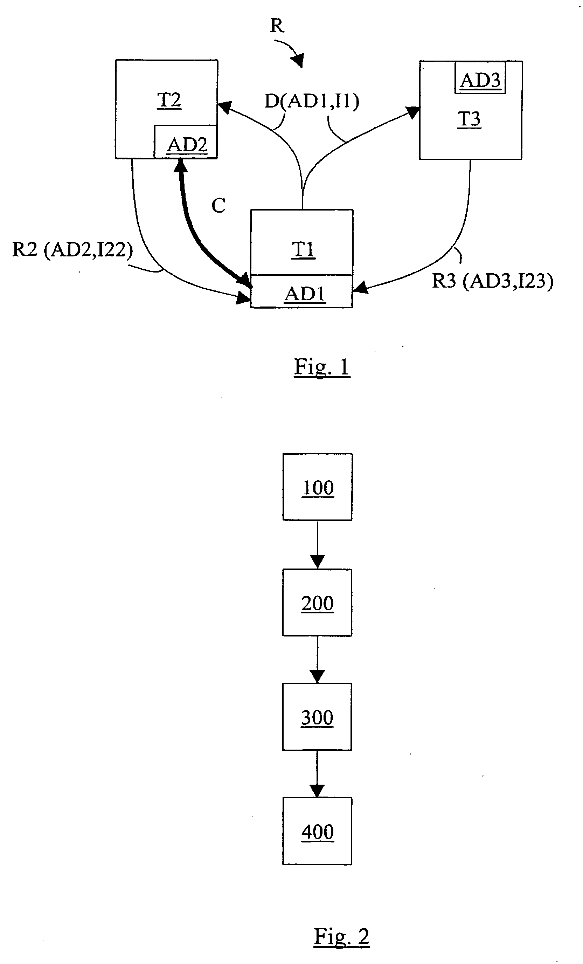

La Fig. 1 représente un schéma synoptique d'un exemple de réseau sans fils de communication par paquets de type ad-Hoc selon la présente invention.

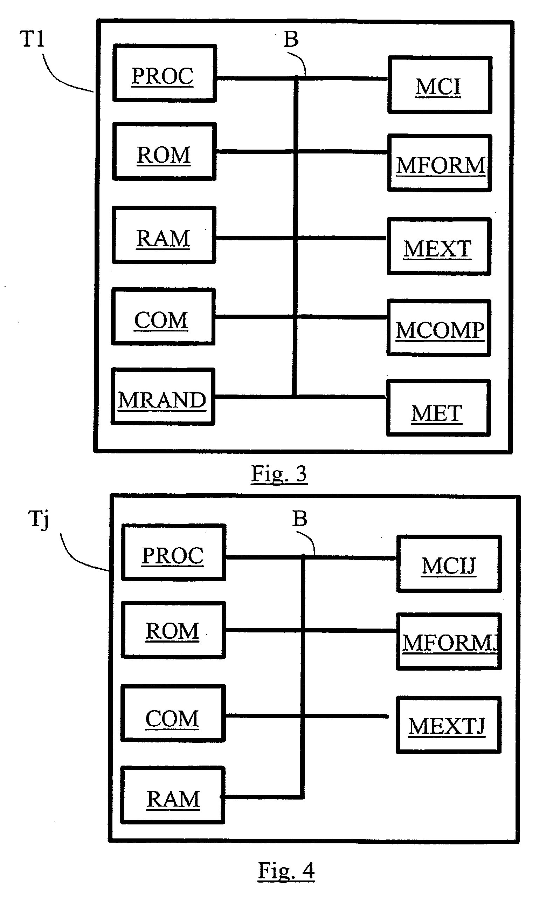

Selon cet exemple, le réseau R est constitué de trois terminaux référencés T1, T2 et T3. Comme on l'a expliqué dans la partie introductive, lors de la configuration d'un tel réseau, chaque terminal T; (i=1 à 3) est associé à une adresse réseau référencées ADᵢ (i=1 à 3). Chaque terminal T; est particulier en ce qu'il comporte des moyens spécifiques qui permettent la mise en oeuvre de l'invention. L'architecture d'un tel terminal selon la présente invention est donnée à la Fig. 3.

La Fig. 2 représente un diagramme des étapes du procédé d'établissement d'une communication point à point entre un terminal appelant T₁ et un terminal appelé T₂ du réseau R décrit à la Fig. 1.

La description de ce procédé est faite en relation avec les Figs. 1 et 2.

Nous rappelons au préalable que le terminal T₁ du réseau R ne connaît que l'identifiant unique public MSN₂ de l'usager appelé, mais il ne connaît pas l'adresse réseau AD₂ du terminal appelé T2.

Dès qu'un usager utilisant le terminal appelant T₁ souhaite établir une communication avec un usager utilisant le terminal appelé T₂, le procédé débute par une étape 100 dite de chiffrement. Au cours de cette étape, exécutée par le terminal appelant T₁, un nombre entier RAND est tout d'abord tiré de manière aléatoire. Ensuite, ce nombre RAND est chiffré par une méthode de chiffrement par clé. Cette clé est définie à partir de l'identifiant unique public MSN₂ qui est associé à l'usager appelé et qui est connu du terminal T₁.

L'étape 100 est suivie d'une étape 200 de diffusion par le terminal appelant T₁ d'un message D contenant l'adresse réseau AD₁ du terminal appelant T₁ et une information I₁, dite première, obtenue à partir du nombre entier aléatoire RAND. Dès lors que le terminal T₂ (respectivement T₃) reçoit le message D, il exécute une étape 300 de traitement au cours de laquelle le terminal récepteur T₂ (respectivement T₃) détermine à partir de l'information I₁ une information dite seconde qui est référencée I_{2,2} (respectivement I_{2,3}) sur la Fig. 1.

Le terminal T₂ (respectivement T₃) répond alors à l'adresse réseau AD₁ contenue dans le message D reçu, un message R₂ (respectivement R₃) qui contient son adresse réseau AD₂ (respectivement AD₃) et l'information I_{2,2} (respectivement I_{2,3}).

Le terminal appelant T₁ compare alors la seconde information I_{2,2} (respectivement I_{2,3}) ainsi reçue à une information I₃, dite troisième. Cette information I₃ est déterminée par le terminal appelant T₁ à partir du nombre entier aléatoire RAND de manière à ce qu'elle soit identique à la seconde information extraite du message reçu lorsque le terminal qui a émis ce message est celui utilisé par l'usager appelé, en l'occurrence le terminal T₂ selon l'exemple précédent.

Supposons que le terminal appelant T₁ reçoive en premier l'information I_{2,3} contenue dans le message R₃ qui a été émis par le terminal T₃. Le terminal T₁ compare alors l'information I₃ à l'information I_{2,3} extraite du message R₃ et constatant la non identité de ces deux informations se met en attente de réception d'un autre message de réponse. Lorsque le terminal appelant T₁ reçoit l'information I_{2,2} contenue dans le message R₂ qui a été émis par le terminal T₂, il compare l'information I₃ à l'information I_{2,2} extraite du message R₂ et constate l'identité de ces deux informations.

Le terminal appelant T₁ exécute alors une étape 400 d'établissement d'une communication entre son adresse réseau AD₁ et l'adresse réseau AD₂ extraite du message R₂. Le procédé s'arrête suite à cet établissement de la communication point à point entre le terminal appelant T₁ et le terminal appelé T₂.

Le procédé précédemment décrit peut-être mis en oeuvre de différentes manières qui se distinguent, d'une part, par la définition des informations échangées entre les différents terminaux et, d'autre part, par la méthode de chiffrement utilisée.

Selon un premier mode de réalisation de la définition des informations échangées, la première information I₁ est le résultat du chiffrement du nombre entier aléatoire RAND par une clé définie à partir de l'identifiant public MSN₂ qui est associé à l'usager utilisant le terminal appelé T₂. De plus, selon ce premier mode de réalisation, la deuxième information I_{2,2} (respectivement I_{2,3}) est le résultat du déchiffrement de la première information I₁ par l'identifiant public MSN₂ (respectivement MSN₃) qui est associé à l'usager utilisant le terminal récepteur T₂ (respectivement T₃). Enfin, selon ce premier mode de réalisation, la troisième information I₃ est le nombre entier aléatoire RAND.

Selon un deuxième mode de réalisation de la définition des informations échangées, la première information I₁ est le nombre entier aléatoire RAND. De plus, selon ce mode de réalisation, la deuxième information I_{2,2} (respectivement I_{2,3}) est le résultat du chiffrement de ladite première information I₁ par l'identifiant unique public MSN₂ (respectivement MSN₃) qui est associé à l'usager utilisant le terminal T₂ (respectivement T₃) récepteur du message diffusé D. Enfin, selon ce deuxième mode de réalisation, la troisième information I₃ est le résultat du chiffrement du nombre entier aléatoire RAND par la clé définie à partir d'un identifiant unique public MSN₂.

Selon un mode de réalisation de la méthode de chiffrement, le nombre entier aléatoire RAND et la clé étant exprimés par un même nombre de bits, le chiffrement du nombre entier aléatoire RAND par la clé est une opération logique réalisée bit à bit. De préférence, cette opération logique bit à bit est un ou exclusif entre les bits du nombre aléatoire RAND et les bits de la clé. Pour cela, la clé est, de préférence, obtenue à partir du numéro de téléphone de l'usager (identifiant unique public) qui est tronqué à 25 bits. Le nombre entier aléatoire RAND est alors également exprimé sur 25 bits.

Selon un autre mode de réalisation de la méthode de chiffrement, le chiffrement du nombre entier aléatoire RAND par la clé est réalisé par une méthode de type par blocs, qui est de préférence une méthode connue de type DES (*Data Encryption Standard* en anglais). C'est une méthode de chiffrement à clef privée. La clé privée sert à la fois à chiffrer et à déchiffrer une donnée. Cette clé privée a une longueur de 64 bits, c'est-à-dire 8 caractères, mais seulement 56 bits sont utilisés. Selon un mode préféré de mise en oeuvre d'une telle méthode, la clé privée est obtenue à partir du numéro de téléphone de l'usager (exprimé sur une vingtaine de bits) qui est alors étendu à 56 bits par exemple par répétition de l'une de ses parties.

On peut noter également que selon un mode de réalisation, l'identifiant unique public associé à un usager peut-être le numéro de téléphone tel qu'exprimé précédemment. Il peut cependant être également le nom de l'usager à partir duquel une valeur numérique est obtenue. Il est bien évident que l'accès au numéro de téléphone d'un usager est accessible, généralement, à partir d'un répertoire qui associe le nom de l'usager à son numéro de téléphone.

La Fig. 3 représente un schéma du terminal T₁ du réseau R destiné à la mise en oeuvre de la présente invention.

Le terminal T₁ est, de manière non limitative, un ordinateur de bureau ou un terminal mobile. Le terminal T₁ comporte un bus de communication B auquel sont reliés des moyens PROC de traitement de données numériques, une mémoire non volatile ROM, une mémoire vive RAM, des moyens COM pour communiquer en mode paquets avec les autres terminaux Tⱼ (j=2,3) du réseau R à travers une communication point à point et pour diffuser des messages sous forme de paquets. Pour cela, le terminal T₁ mémorise dans la mémoire ROM une adresse de diffusion et une adresse réseau AD₁ qu'il a obtenue par tirage aléatoire d'une valeur appartenant à un ensemble d'adresses réseau prédéterminé.

La mémoire non volatile ROM mémorise les programmes et les données numériques permettant, entre autres, la mise en oeuvre des étapes du procédé conformément à celles décrites précédemment. De manière plus générale, la mémoire ROM est lisible par les moyens de traitement PROC, intégrée ou non au terminal T₁, et peut être amovible.

Lors de la mise sous tension du terminal T₁, les programmes selon la présente invention sont transférés dans la mémoire vive RAM qui contient alors le code exécutable de l'invention ainsi que les données nécessaires à la mise en oeuvre de l'invention.

Le terminal T₁ comporte, selon la présente invention des moyens MRAND reliés au bus B. Les moyens MRAND sont des moyens pour tirer un nombre entier de manière aléatoire RAND dans un ensemble de valeurs extrêmes prédéterminées.

Il comporte également des moyens MCI reliés au bus B. Les moyens MCI sont des moyens de chiffrement d'un nombre entier par clé définie à partir de l'identifiant unique public MSN₂ qui est associé à l'usager appelé utilisant le terminal T₂ du réseau R selon l'exemple de la Fig. 1. Le terminal T₁ comporte également des moyens MFORM reliés au bus B. Les moyens MFORM sont des moyens pour former un message D destiné à être diffusé qui contient l'adresse réseau AD₁ dudit terminal T₁ et une première information I₁ déterminée à partir d'un nombre entier et à partir, selon un mode de réalisation, à partir également de l'identifiant unique public MSN₂ associé à l'usager appelé.

Le terminal T₁ comporte aussi des moyens MEXT reliés au bus B. Les moyens MEXT sont des moyens pour extraire à partir d'un message Rᵢ émis par un autre terminal Tᵢ dudit réseau R qui a été reçu à partir de l'adresse réseau AD₁ dudit terminal T₁, l'adresse réseau ADⱼ dudit autre terminal Tⱼ et une deuxième information I_{2,j} qui a été déterminée à partir d'une information I₁ extraite à partir d'un message D diffusé par ledit terminal T₁ et de l'identifiant unique public MSNⱼ associé à l'usager utilisant ledit autre terminal Tⱼ.

Il comporte également des moyens MCOMP reliés au bus B. Les moyens MCOMP sont des moyens pour comparer une information I₃ déterminée par le terminal T₁ à partir d'un nombre entier de manière à ce qu'elle soit identique à une deuxième information extraite d'un message reçu sur l'adresse réseau dudit terminal T₁ lorsque le terminal qui a émis ce message est celui utilisé par l'usager appelé, en l'occurrence le terminal T₂ selon l'exemple précédent.

Enfin, le terminal T₁ comporte des moyens MET reliés au bus B. Les moyens MET sont des moyens pour établir une communication point à point entre l'adresse réseau AD₁ du terminal T₁ et l'adresse réseau ADⱼ d'un autre terminal Tⱼ, ladite adresse réseau ADⱼ étant extraite d'un message reçu par le terminal T₁ sur son adresse réseau AD₁, ladite adresse réseau correspondant au terminal, en l'occurrence le terminal T₂ selon l'exemple précédent, qui a émis le message qui contient une deuxième information identique à ladite troisième information I₃.

La Fig. 4 représente un schéma d'un terminal Tⱼ (j=2,3 selon l'exemple de la Fig. 1) du réseau R destiné à la mise en oeuvre de la présente invention.

Le terminal Tⱼ est, de manière non limitative, un ordinateur de bureau ou un terminal mobile. Le terminal Tⱼ comporte un bus de communication B auquel sont reliés des moyens PROC de traitement de données numériques, une mémoire non volatile ROM, une mémoire vive RAM, des moyens COM pour communiquer en mode paquets avec d'autres terminaux du réseau R à travers une communication point à point. Pour cela, le terminal Tⱼ mémorise dans la mémoire ROM une adresse réseau ADⱼ qu'il a obtenue par tirage aléatoire d'une valeur appartenant à un ensemble d'adresses réseau prédéterminé.

La mémoire non volatile ROM mémorise les programmes et les données numériques permettant, entre autres, la mise en oeuvre des étapes du procédé conformément à celles décrites précédemment. De manière plus générale, la mémoire ROM est lisible par les moyens de traitement PROC, intégrée ou non au terminal Tⱼ, et peut être amovible.

Lors de la mise sous tension du terminal Tⱼ, les programmes selon la présente invention sont transférés dans la mémoire vive RAM qui contient alors le code exécutable de l'invention ainsi que les données nécessaires à la mise en oeuvre de l'invention.

Le terminal Tⱼ comporte des moyens MCIJ reliés au bus B. Les moyens MCIJ sont des moyens de chiffrement d'un nombre entier par clé définie à partir de l'identifiant unique public MSNⱼ qui est associé à l'usager utilisant le terminal Tⱼ.

Le terminal Tⱼ comporte également des moyens MFORMJ reliés au bus B. Les moyens MFORMJ sont des moyens pour former un message Rⱼ destiné à être émis à l'adresse réseau AD₁ du terminal T₁. Le message Rⱼ contient l'adresse ADⱼ dudit terminal Tⱼ et une deuxième information I_{2,j} déterminée à partir d'une information I₁ extraite à partir d'un message D diffusé reçu et de l'identifiant unique public MSNⱼ associé à l'usager utilisant ledit terminal Tⱼ.

Le terminal Tⱼ comporte aussi des moyens MEXTJ reliés au bus B. Les moyens MEXTJ sont des moyens pour extraire à partir d'un message D reçu qui a été diffusé par le terminal T₁ dudit réseau une information I₁ et l'adresse réseau AD₁ dudit terminal T₁.

Bien que les terminaux T₁ et T₂ aient été décrits par deux figures différentes, il est bien entendu qu'un même terminal peut inclure à la fois les moyens de mise en oeuvre de l'invention du terminal T₁ et ceux du terminal T₂.

## Revendications

1. Procédé d'établissement d'une communication point à point entre un terminal appelant (T₁) et un terminal appelé (T₂) d'un réseau sans fils de communication par paquets de type ad-hoc constitué d'une pluralité de terminaux (Tᵢ, i=1 à N), chaque terminal du réseau étant associé à une adresse réseau (ADᵢ) utilisée pour échanger des données via ledit réseau, **caractérisé en ce qu'**il comporte :
- une étape (100) de chiffrement par le terminal appelant (T₁) d'un nombre entier aléatoire (RAND) par une clé définie à partir d'un identifiant unique (MSN₂), dit public, qui est associé à l'usager utilisant le terminal appelé (T₂),
- une étape (200) de diffusion par le terminal appelant (T₁) d'un message contenant l'adresse réseau (AD₁) du terminal appelant (T₁) et une information, dite première, déterminée à partir du nombre entier aléatoire (RAND),
- une étape (300) de traitement par chaque terminal du réseau (Tⱼ, j=2 à N) qui est récepteur du message diffusé, au cours de laquelle le terminal récepteur (Tⱼ, j=2 à N) répond à l'adresse réseau (AD₁) du terminal appelant un message de réponse (Rⱼ) comportant son adresse réseau (ADⱼ) et une information, dite seconde, qui est déterminée à partir de ladite première information et de l'identifiant unique public (MSNⱼ, j=2,3) associé à l'usager dudit terminal récepteur (Tⱼ), et
- une étape d'extraction par le terminal appelant à partir du message de réponse reçu à l'adresse réseau dudit terminal appelant, de l'adresse réseau du terminal récepteur (Tⱼ) et de la seconde information ;
- une étape (400) d'établissement par ledit terminal appelant d'une communication point à point entre l'adresse réseau (AD₁) du terminal appelant et l'adresse réseau (AD₂) du terminal récepteur identifié comme étant ledit terminal appelé (T₂) lorsque la seconde information émise par ledit terminal récepteur qui est reçue par le terminal appelant est déterminée, après comparaison, identique à une information, dite troisième, déterminée par le terminal appelant à partir du nombre entier aléatoire (RAND).

2. Procédé selon la revendication 1, **caractérisé en ce que** ladite première information est le résultat du chiffrement du nombre entier aléatoire par la clé, ladite deuxième information est le résultat du déchiffrement de ladite première information par un identifiant public (MSNⱼ) qui est associé à l'usager utilisant l'un des terminaux (Tⱼ) récepteur du message diffusé et ladite troisième information est le nombre entier aléatoire (RAND).

3. Procédé selon la revendication 1, **caractérisé en ce que** ladite première information est le nombre entier aléatoire (RAND), ladite deuxième information est le résultat du chiffrement de ladite première information par un identifiant public (MSNⱼ) qui est associé à l'usager utilisant l'un des terminaux récepteur (Tⱼ) du message diffusé et ladite troisième information est le résultat du chiffrement du nombre entier aléatoire par la clé.

4. Procédé selon l'une des revendications précédentes, ledit nombre entier aléatoire (RAND) et la clé étant exprimés par un même nombre de bits, **caractérisé en ce que** le chiffrement du nombre entier aléatoire (RAND) par la clé est une opération logique réalisée bit à bit.

5. Procédé selon la revendication 4, **caractérisé en ce que** l'opération logique bit à bit est un ou exclusif.

6. Procédé selon l'une des revendications 1 à 3, **caractérisé en ce que** le chiffrement du nombre entier aléatoire (RAND) par la clé est réalisé par une méthode de type par blocs.

7. Procédé selon l'une des revendications précédentes, **caractérisé en ce que** l'identifiant public associé à un usager est son numéro de téléphone.

8. Terminal d'un réseau sans fils de communication par paquets de type ad-Hoc adapté pour établir une communication point à point avec un autre terminal (T2) dit appelé, ledit terminal étant prévu pour traiter et mémoriser des données numériques, pour communiquer en mode paquets avec d'autres terminaux dudit réseau à travers une communication point à point, pour diffuser des messages sous forme de paquets et pour obtenir une adresse réseau par tirage aléatoire d'une valeur appartenant à un ensemble d'adresses réseau prédéterminé, ledit terminal mémorisant une adresse de diffusion et ladite adresse réseau (AD₁), **caractérisé en ce qu'**il comporte :
- des moyens (MCI) de chiffrement d'un nombre entier aléatoire par clé définie à partir de l'identifiant unique public (MSN₂) qui est associé à l'usager appelé utilisant un autre terminal (T₂) dudit réseau,
- des moyens (MFORM) de diffusion d'un message (D) qui contient l'adresse réseau (AD₁) dudit terminal et une première information (I₁) déterminée à partir du nombre entier aléatoire,
- des moyens (MEXT) pour extraire à partir d'un message (Rⱼ) émis par un autre terminal (Tⱼ) dudit réseau qui a été reçu à partir de l'adresse réseau (AD₁) dudit terminal, l'adresse réseau (ADⱼ) dudit autre terminal (Tⱼ) et une deuxième information (I₂ⱼ) qui a été déterminée à partir d'une première information (I₁) extraite à partir d'un message (D) diffusé par ledit terminal et de l'identifiant unique public (MSNⱼ) associé à l'usager utilisant ledit autre terminal (Tⱼ),
- des moyens (MCOMP) pour comparer une information (I₃), dite troisième, déterminée par ledit terminal à partir du nombre entier aléatoire et d'une deuxième information extraite d'un message reçu sur son adresse réseau lorsque le terminal appelé a émis ce message, et
- des moyens (MET) pour établir une communication point à point entre l'adresse réseau (AD₁) dudit terminal et l'adresse réseau (ADⱼ) d'un autre terminal dudit réseau (Tⱼ), l'adresse réseau (ADⱼ) dudit autre terminal étant extraite d'un message reçu par ledit terminal sur son adresse réseau (AD₂) et correspondant à un message reçu qui contient une deuxième information identique à ladite troisième information (I₃).

9. Terminal d'un réseau sans fils de communication par paquets de type ad-Hoc adapté pour établir une communication point à point avec un autre terminal (T₁) dit appelant, ledit terminal étant prévu pour traiter et mémoriser des données numériques, pour communiquer en mode paquets avec d'autres terminaux dudit réseau à travers une communication point à point pour obtenir une adresse réseau (ADⱼ) par tirage aléatoire d'une valeur appartenant à un ensemble d'adresses réseau prédéterminé et pour mémoriser ladite adresse réseau, **caractérisé en ce qu'**il comporte :
- des moyens (MEXT_{J}) de réception d'un message (D) diffusé par ledit terminal appelant (T₁) et contenant une première information (I₁) et l'adresse réseau (AD₁) dudit terminal appelant (T₁), et
- des moyens (MFORMJ) pour émettre un message de réponse (Rⱼ) à destination de l'adresse réseau (AD₁) du terminal appelant (T₁) contenant l'adresse réseau mémorisée (ADⱼ) dudit terminal et une deuxième information (I_{2,j}) déterminée à partir de la première information (I₁) contenue dans le message (D) reçu et de l'identifiant unique public (MSNⱼ) associé à l'usager utilisant ledit terminal, et des moyens pour établir une communication point à point avec le terminal appelant.

10. Réseau sans fils de communication par paquets de type ad-Hoc comportant une pluralité de terminaux, **caractérisé en ce qu'**au moins un desdits terminaux est conforme à la revendication 8 et au moins un autre desdits terminaux est conforme à la revendication 9.

## Claims

1. Method for establishing a point-to-point communication between a calling terminal (T₁) and a called terminal (T₂) of an ad-hoc type packet-based communication wireless network consisting of a plurality of terminals (T;, i = 1 to N), each terminal of the network being associated to a network address (ADᵢ) used for exchanging data via said network, **characterized in that** said method comprises the following steps:
a step (100) of ciphering, by the calling terminal (T₁), a random integer by a key defined based on a so-called public unique identifier (MSN₂), which is associated to the user using the called terminal (T₂),
a step (200) of broadcasting, by the calling terminal (T₁), a message containing the network address (AD₁) of the calling terminal (T₁) and a so-called first information, which is determined based on the random integer (RAND),
a step (300) of processing, by each terminal of the network (Tⱼ,j = 2 to N) receiving the broadcasted message, during which the receiving terminal (Tⱼ, j = 2 to N) responds to the network address (AD₁) of the calling terminal a response message (Rⱼ) comprising its network address (ADⱼ) and a so-called second information, which is determined based on said first information and the unique public identifier (MSNⱼ, j = 2, 3) associated to the user of said receiving terminal (Tⱼ), and
a step of extracting, by the calling terminal, based on the response message received at the network address of said calling terminal, the network address of the receiving terminal (Tⱼ) and the second information;
a step (400) of establishing, by said calling terminal, a point-to-point communication between the network address (AD₁) of the calling terminal and the network address (AD₂) of the receiving terminal identified as said called terminal (T₂), when the second information transmitted by said receiving terminal, which is received by the calling terminal, is determined, after a comparison, as being identical to a so-called third information, which is determined by the calling terminal based on the random integer (RAND).

2. The method according to claim 1, **characterized in that** said first information is the result of ciphering the random integer by the key, said second information is the result of deciphering said first information by a public identifier (MSNⱼ), which is associated to the user using one of the terminals (Tⱼ) receiving the broadcasted message, and said third information is the random integer (RAND).

3. The method according to claim 1, **characterized in that** said first information is the random integer (RAND), said second information is the result of ciphering said first information by a public identifier (MSNj), which is associated to the user using one of the terminals (Tⱼ) receiving the broadcasted message, and said third information is the result of ciphering the random integer by the key.

4. The method according to one of the preceding claims, wherein said random integer (RAND) and the key are expressed by a same number of bits, **characterized in that** ciphering the random integer (RAND) by the key is a logical operation, which is carried out bit by bit.

5. The method according to claim 4, **characterized in that** the bit for bit logical operation is an exclusive OR.

6. The method according to one of the claims 1 to 3, **characterized in that** ciphering the random integer (RAND) by the key is carried out by a block type method.

7. The method according to one of the preceding claims, **characterized in that** the public identifier associated to a user is its telephone number.

8. Terminal of an ad-hoc type packet-based communication wireless network adapted for establishing a point-to-point communication with another so-called called terminal (T₂), said terminal being adapted for processing and storing digital data, for communicating in a packet mode with other terminals of said network via a point-to-point communication, for broadcasting messages in the form of packets, and for obtaining a network address by random sampling of a value belonging to a predetermined set of network addresses, said terminal storing a broadcast address and said network address (AD₁), **characterized in that** said terminal comprises:
means (MCI) for ciphering a random integer by a key defined based on the unique public identifier (MSN₂), which is associated to the called user using another terminal (T₂) of said network,
means (MFORM) for broadcasting a message (D), which contains the network address (AD₁) of said terminal and a first information (I₁), which is determined based on the random integer,
means (MEXT) for extracting, based on a message (Rⱼ) transmitted by another terminal (Tⱼ) of said network, which has been received from the network address (AD₁) of said terminal, the network address (ADⱼ) of said other terminal (Tⱼ) and a second information (I_{2J}), which has been determined based on a first information (I₁) extracted based on a message (D) broadcasted by said terminal, and the unique public identifier (MSNⱼ) associated to the user using said other terminal (Tⱼ),
means (MCOMP) for comparing a so-called third information (I₃), which is determined by said terminal based on the random integer and a second information extracted from a message received at its network address when the called terminal has sent this message, and
means (MET) for establishing a point-to-point communication between the network address (AD₁) of said terminal and the network address (ADⱼ) of another terminal of said network (Tⱼ), wherein the network address (ADⱼ) of said other terminal is extracted from a message, which is received by said terminal at its network address (AD₂) and corresponds to a received message containing a second information that is identical to said third information (I₃).

9. Terminal of an ad-hoc type packet-based communication wireless network adapted for establishing a point-to-point communication with another so-called calling terminal (T₁), said terminal being adapted for processing and storing digital data, for communicating in a packet mode with other terminals of said network via a point-to-point communication, for obtaining a network address (ADⱼ) by random sampling of a value belonging to a predetermined set of network addresses, and for storing said network address, **characterized in that** said terminal comprises:
means (MEXT_{J}) for receiving a message (D) broadcasted by said calling terminal (T₁) and containing a first information (I₁) and the network address (AD₁) of said calling terminal (T₁), and
means (MFORMJ) for transmitting towards the network address (AD₁) of the calling terminal (T₁) a response message (Rⱼ) containing the stored network address (ADⱼ) of said terminal and a second information (I_{2J}), which is determined based on the first information (I₁) contained in the received message (D) and the unique public identifier (MSNⱼ) associated to the user using said terminal, and
means for establishing a point-to-point communication with the calling terminal.

10. Ad-hoc type packet-based communication wireless network comprising a plurality of terminals, **characterized in that** at least one of said terminals is in compliance with claim 8 and at least one other of said terminals is in compliance with claim 9.

## Patentansprüche

1. Verfahren zur Herstellung einer Punkt-zu-Punkt-Kommunikation zwischen einem anrufenden Endgerät (T₁) und einem angerufenen Endgerät (T₂) in einem drahtlosen Netzwerk zur Ad-hoc-Paket-Kommunikation, bestehend aus einer Vielzahl von Endgeräten (Ti, i = 1 bis N), wobei jedes Endgerät des Netzwerks mit einer Netzwerkadresse (ADᵢ) assoziiert ist, die zum Austauschen von Daten über das Netzwerk verwendet wird, **dadurch gekennzeichnet, dass** das Verfahren die folgenden Schritte umfasst:
einen Schritt (100) des Verschlüsselns durch das anrufende Endgerät (T₁) einer zufälligen Ganzzahl (RAND) durch einen Schlüssel, der basierend auf einem sogenannten öffentlichen einzigartigen Identifizierer (MSN₂) definiert ist, der mit dem Benutzer assoziiert ist, der das angerufene Endgerät (T₂) benutzt,
einen Schritt (200) der Verbreitens durch das anrufende Endgerät (T₁) einer Nachricht, die die Netzwerkadresse (AD₁) des anrufenden Endgeräts (T₁) und eine sogenannte erste Information enthält, die basierend auf der zufälligen Ganzzahl (RAND) bestimmt wird,
einen Schritt (300) des Bearbeitens durch jedes Endgerät des Netzwerks (Tⱼ, j = 2 bis N), das die verbreitete Nachricht empfängt, während das empfangende Endgerät (Tⱼ, j = 2 bis N) an die Netzwerkadresse (AD₁) des anrufenden Endgeräts mit einer Antwortnachricht (Rⱼ) antwortet, die seine Netzwerkadresse (ADⱼ) und
eine sogenannte zweite Information aufweist, die basierend auf der ersten Information und dem öffentlichen einzigartigen Identifizierer (MSNⱼ, j = 2, 3) bestimmt wird, der mit dem Benutzer des empfangenden Endgeräts (Tⱼ) assoziiert ist, und
einen Schritt des Extrahierens durch das anrufende Endgerät der Netzwerkadresse des empfangenden Endgeräts (Tⱼ) und der zweiten Information, basierend auf der Antwortnachricht, die an der Netzwerkadresse des anrufenden Endgeräts empfangen wird;
einen Schritt (400) des Herstellens durch das anrufende Endgerät einer Punkt-zu-Punkt-Kommunikation zwischen der Netzwerkadresse (AD₁) des anrufenden Endgeräts und der Netzwerkadresse (AD₂) des empfangenden Endgeräts, das als das angerufene Endgerät (T₂) identifiziert wird, wenn die durch das empfangende Endgerät gesendete zweite Information, die durch das anrufende Endgerät empfangen wird, nach einem Vergleich als identisch zu einer sogenannten dritten Information bestimmt wird, die durch das anrufende Endgerät basierend auf der zufälligen Ganzzahl (RAND) bestimmt wird.

2. Verfahren nach Anspruch 1, **dadurch gekennzeichnet, dass** die erste Information das Ergebnis des Verschlüsselns der zufälligen Ganzzahl durch den Schlüssel ist, die zweite Information das Ergebnis des Entschlüsselns der ersten Information durch einen öffentlichen Identifizierer (MSNⱼ) ist, der mit dem Benutzer assoziiert ist, der eines der die verbreitete Nachricht empfangenden Endgeräte (Tⱼ) verwendet, und die dritte Information die zufällige Ganzzahl (RAND) ist.

3. Verfahren nach Anspruch 1, **dadurch gekennzeichnet, dass** die erste Information die zufällige Ganzzahl (RAND) ist, die zweite Information das Ergebnis des Verschlüsselns der ersten Information durch einen öffentlichen Identifizierer (MSNⱼ) ist, der mit dem Benutzer assoziiert ist, der eines der die verbreitete Nachricht empfangenden Endgeräte (Tⱼ) verwendet, und die dritte Information das Ergebnis des Verschlüsselns der zufälligen Ganzzahl durch den Schlüssel ist.

4. Verfahrend nach einem der vorhergehenden Ansprüche, wobei die zufällige Ganzzahl (RAND) und der Schlüssel durch eine gleiche Anzahl von Bits ausgedrückt werden, **dadurch gekennzeichnet, dass** das Verschlüsseln der zufälligen Ganzzahl (RAND) durch den Schlüssel eine logische Operation ist, die Bit für Bit durchgeführt wird.

5. Verfahren nach Anspruch 4, **dadurch gekennzeichnet, dass** die Bit-für-Bit durchgeführte logische Operation ein exklusives Oder ist.

6. Verfahren nach einem der Ansprüche 1 bis 3, **dadurch gekennzeichnet, dass** das Verschlüsseln der zufälligen Ganzzahl (RAND) durch den Schlüssel durch ein Blocktypverfahren durchgeführt wird.

7. Verfahren nach einem der vorhergehenden Ansprüche, **dadurch gekennzeichnet, dass** der mit einem Benutzer assoziierte öffentliche Identifizierer seine Telefonnummer ist.

8. Endgerät eines drahtlosen Netzwerks zur Ad-hoc-Paket-Kommunikation zum Herstellen einer Punkt-zu-Punkt-Kommunikation mit einem anderen sogenannten angerufenen Endgerät (T₂), wobei das Endgerät zum Bearbeiten und Speichern von digitalen Daten, zum Kommunizieren in einem Paket-Modus mit anderen Endgeräten des Netzwerks über eine Punkt-zu-Punkt-Kommunikation, zum Verbreiten von Nachrichten in Form von Paketen, und zum Erhalten einer Netzwerkadresse durch zufällige Probenahme eines Wertes bestimmt ist, der zu einem vorbestimmten Satz von Netzwerkadressen gehört, wobei das Endgerät eine Verbreitungsadresse und die Netzwerkadresse (AD₁) speichert, **dadurch gekennzeichnet, dass** das Endgerät Folgendes aufweist:
Mittel (MCI) zum Verschlüsseln einer zufälligen Ganzzahl durch einen Schlüssel, der basierend auf dem einzigartigen öffentlichen Identifizierer (MSN₂) definiert ist, der mit dem angerufenen Benutzer assoziiert ist, der ein anderes Endgerät (T₂) des Netzwerks verwendet,
Mittel (MFORM) zum Verbreiten einer Nachricht (D), die die Netzwerkadresse (AD₁) des Endgeräts und eine basierend auf der zufälligen Ganzzahl bestimmte erste Information (I₁) enthält,
Mittel (MEXT) zum Extrahieren, basierend auf einer durch ein anderes Endgerät (Tⱼ) des Netzwerks gesendeten Nachricht (Rⱼ), die von der Netzwerkadresse (AD₁) des Endgeräts empfangen wurde, der Netzwerkadresse (ADⱼ) des anderen Endgeräts (Tⱼ) und einer zweiten Information (I_{2J}), die basierend auf einer ersten Information (I₁) bestimmt wurde, die von einer Nachricht (D), die durch das Endgerät verbreitet wurde, und dem einzigartigen öffentlichen Identifizierer (MSNⱼ) extrahiert wurde, der mit dem Benutzer assoziiert ist, der das andere Endgerät (Tⱼ) verwendet,
Mittel (MCOMP) zum Vergleichen einer sogenannten dritten Information (I₃), die durch das Endgerät basierend auf der zufälligen Ganzzahl und einer zweiten Information bestimmt wurde, die von einer Nachricht extrahiert wurde, die an seiner Netzwerkadresse empfangen wurde, als das angerufene Endgerät diese Nachricht gesendet hat, und
Mittel (MET) zum Herstellen einer Punkt-zu-Punkt-Kommunikation zwischen der Netzwerkadresse (AD₁) des Endgeräts und der Netzwerkadresse (ADⱼ) eines anderen Endgeräts des Netzwerks (Tⱼ),
wobei die Netzwerkadresse (ADⱼ) des anderen Endgeräts von einer Nachricht extrahiert wird, die vom Endgerät an seiner Netzwerkadresse (AD₂) empfangen wird und einer empfangenen Nachricht entspricht, die eine zweite Information enthält, die zur dritten Information (I₃) identisch ist.

9. Endgerät eines drahtlosen Netzwerks zur Ad-hoc-Paket-Kommunikation zum Herstellen einer Punkt-zu-Punkt-Kommunikation mit einem anderen sogenannten anrufenden Endgerät (T₁), wobei das Endgerät zum Bearbeiten und Speichern von digitalen Daten, zum Kommunizieren in einem Paket-Modus mit anderen Endgeräten des Netzwerks über eine Punkt-zu-Punkt-Kommunikation, zum Erhalten einer Netzwerkadresse (ADⱼ) durch zufällige Probenahme eines Wertes, der zu einem vorbestimmten Satz von Netzwerkadressen gehört, und zum Speichern der Netzwerkadresse bestimmt ist, **dadurch gekennzeichnet, dass** das Endgerät Folgendes aufweist:
Mittel (MEXT_{J}) zum Empfangen einer Nachricht (D), die vom anrufenden Endgerät (T₁) verbreitet wird und eine erste Information (I₁) und die Netzwerkadresse (AD₁) des anrufenden Endgeräts (T₁) enthält, und
Mittel (MFORMJ) zum Senden einer Antwortnachricht (Rⱼ) an die Netzwerkadresse (AD₁) des anrufenden Endgeräts (T₁), die die gespeicherte Netzwerkadresse (ADⱼ) des Endgeräts und eine zweite Information (I₂ⱼ) enthält, die basierend auf der ersten Information (I₁),
die in der empfangenen Nachricht (D) enthalten ist, und dem einzigartigen öffentlichen Identifizierer (MSNⱼ) bestimmt wird, der mit dem Benutzer assoziiert ist, der das Endgerät verwendet, und
Mittel zum Herstellen einer Punkt-zu-Punkt-Kommunikation mit dem anrufenden Endgerät.

10. Drahtloses Netzwerk zur Ad-hoc-Paket-Kommunikation, umfassend eine Vielzahl von Endgeräten, **dadurch gekennzeichnet, dass** mindestens eines der Endgeräte dem Anspruch 8 entspricht und mindestens ein anderes der Endgeräte dem Anspruch 9 entspricht.
